# EUROPÄISCHE PATENTSCHRIFT

(11) **EP 2 820 057 B1**
(45) Veröffentlichungstag und Bekanntmachung des Hinweises auf die Patenterteilung: **26.05.2021**
(21) Anmeldenummer: 13704466.5
(22) Anmeldetag: 18.02.2013
(51) Int. Cl.: C08G 18/28, C08G 18/36, C08G 18/42, C08G 18/48, C08G 18/66

(54) **POLYETHERESTERPOLYOLE UND IHRE VERWENDUNG ZUR HERSTELLUNG VON POLYURETHAN-HARTSCHAUMSTOFFEN**
POLYETHER ESTER POLYOLS AND USE OF SAME FOR PRODUCING POLYURETHANE SOLID FOAM MATERIALS
POLYÉTHER-ESTER-POLYOLS ET LEUR UTILISATION POUR LA FABRICATION DE MOUSSES RIGIDES DE POLYURÉTHANE

(30) Priorität: 01.03.2012 EP 12157691
(43) Veröffentlichungstag der Anmeldung: 07.01.2015
(73) Patentinhaber: BASF SE, 67056 Ludwigshafen am Rhein (DE)
(72) Erfinder: KUNST, Andreas, 67063 Ludwigshafen (DE); ELING, Berend, 49448 Lemförde (DE); SCHÜTTE, Markus, 49080 Osnabrück (DE); KOCH, Sebastian, 49448 Lemförde (DE); FRICKE, Marc, 49090 Osnabrück (DE); KÖNIG, Christian, 68165 Mannheim (DE)
(74) Vertreter: BASF IP Association
(86) Internationale Anmeldenummer: PCT/EP2013/053152
(87) Internationale Veröffentlichungsnummer: WO 2013/127647

(56) Entgegenhaltungen:
- EP-A1- 1 923 417
- EP-A2- 0 209 823
- DE-A1- 19 630 281
- DE-C1- 4 434 694

## Beschreibung

Die Erfindung betrifft Polyetheresterpolyole, diese enthaltende Polyolmischungen, ein Verfahren zur Herstellung von Polyurethan-Hartschaumstoffen unter Verwendung der Polyetheresterpolyole sowie die Polyurethan-Hartschaumstoffe selbst.

Polyurethan-Hartschaumstoffe sind seit langem bekannt und vielfach beschrieben worden. Der Einsatz der Polyurethan-Hartschaumstoffe erfolgt vorwiegend zur Wärmeisolation, beispielsweise in Kältegeräten, Transportmitteln oder Gebäuden sowie zur Herstellung von Bauelementen, insbesondere Sandwich-Elementen.

Es ist wichtig, dass die Polyurethan-Hartschaumstoffe die Hohlräume gleichmäßig und lunkerfrei ausfüllen, so dass durch möglichst gute Verbindung mit den Deckschichten eine stabile Konstruktion erzeugt wird, die für eine gute thermische Isolation sorgt. Um Schaumfehlstellen zu verhindern, muss hierzu das schaumfähige PU-Reaktionsgemisch innerhalb einer kurzen Zeit in den zu isolierenden Hohlraum eingeführt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von Polyurethan-Hartschaumstoffen und ihre Verwendung als Deck- oder Kernschicht in Verbundelementen sowie ihre Anwendung als Dämmschicht in der Kühl- oder Heizungstechnik findet sich z.B. in "Polyurethane", Kunststoff-Handbuch, Band 7, 3. Auflage 1993, herausgegeben von Dr. Günter Oertel, Carl-Hanser-Verlag, München/Wien.

Geeignete Polyurethan-Hartschaumstoffe können in bekannter Weise durch Umsetzung von organischen Polyisocyanaten mit einer oder mehreren Verbindungen mit mindestens zwei reaktiven Wasserstoffatomen in Gegenwart von Treibmitteln, Katalysatoren und gegebenenfalls Hilfsmitteln und/oder Zusatzstoffen hergestellt werden.

Als Verbindungen mit mindestens zwei mit Isocyanatgruppen reaktiven Wasserstoffatomen werden bei der Herstellung der Polyurethane vorzugsweise Polyetheralkohole und/oder Polyesteralkohole eingesetzt. Die Auswahl der Polyole erfolgt insbesondere unter Berücksichtigung der Kosten und der gewünschten Anwendungseigenschaften (z.B. EP-A 1 632 511, US-B 6,495,722, WO 2006/108833).

Üblicherweise werden zur Herstellung von Hartschaumstoffen auf Isocyanatbasis Polyole mit hohen Funktionalitäten und niedrigem Molekulargewicht verwendet, um eine optimale Vernetzung der Schäume zu gewährleisten. Die vorzugsweise eingesetzten Polyetheralkohole haben zumeist eine Funktionalität von 4 bis 8 und eine Hydroxylzahl im Bereich zwischen 300 bis 600, insbesondere zwischen 400 und 500 mg KOH/g. Es ist bekannt, dass Polyole mit sehr hoher Funktionalität und Hydroxylzahlen im Bereich zwischen 300 und 600 eine sehr hohe Viskosität aufweisen. Weiterhin ist bekannt, dass derartige Polyole sehr polar sind und somit ein schlechtes Lösungsvermögen für Kohlenwasserstoffe aufweisen. Um diesen Mangel zu beheben, werden der Polyolkomponente häufig Polyetheralkohole mit Funktionalitäten von 2 bis 4 und Hydroxylzahlen von 100 bis 350 mg KOH/g zugesetzt.

Außerdem ist bekannt, dass die Fließfähigkeit von Polyolkomponenten auf Basis hochfunktioneller, polarer Polyole nicht immer zufriedenstellend ist. Aus EP 1 138 709 ist aber bekannt, dass Hartschaumstoffe mit einer guten Fließfähigkeit hergestellt werden können, wenn die Polyolkomponente mindestens einen Polyetheralkohol mit einer Hydroxylzahl von 100 bis 250 mg KOH/g enthält, der durch Anlagerung von Alkylenoxiden an H-funktionelle Startsubstanzen mit 2 bis 4 aktiven Wasserstoffatomen, insbesondere Glykole, Trimethylolpropan, Glycerin, Pentaerythrit oder TDA (Toluylendiamin) hergestellt wurde.

DE 198 12 174 beschreibt ein Verfahren zur Herstellung von Polyesterpolyolen unter Einsatz von OH-haltigen Fettsäureglyceriden sowie deren Einsatz zur Herstellung von offenzelligen Polyurethanhartschaumstoffen.

Aus EP 1 923 417 ist bekannt, dass eine Polyolkomponenten enthaltend Polyetheresterpolyole auf Basis von keine OH-Gruppen aufweisenden Fetten wie Sojaöl verbesserte Treibmittellöslichkeiten aufweisen und die daraus hergestellten Hartschaumstoffe eine kurze Entformungszeit aufweisen.

Die nach dem oben beschriebenen Stand der Technik erhältlichen Schaumstoffe können noch nicht allen Anforderungen gerecht werden.

Es besteht daher die Aufgabe, eine Polyolkomponente zur Herstellung von Polyurethan-Hartschaumstoffen bereitzustellen, die eine hohe Löslichkeit für physikalische Treibmittel aufweist und auch bei Änderungen der Zusammensetzung phasenstabil ist. Die Phasenstabilität soll durch den Einsatz der erfindungsgemäßen Polyetheresterpolyole erhalten werden. Durch die Verwendung von Polyetheresterpolyolen mit einer höheren Treibmittellöslichkeit können Formulierungen mit einem höheren Anteil an hochfunktionellen Vernetzer-Polyolen eingesetzt werden, die eine höhere Druckfestigkeit besitzen sollten.

Weiterhin sollen solche Formulierungen eine niedrige Viskosität und gute Verarbeitungseigenschaften aufweisen, insbesondere eine gute Fließfähigkeit besitzen und ein schnelles Entformen ermöglichen.

Gelöst wird die Aufgabe durch Polyetheresterpolyole enthaltend das Umsetzungsprodukt von
a1) 20 bis 50 Gew.-% eines oder mehrerer Polyole mit einer mittleren Funktionalität von 2,5 bis 8,
a2) 5 bis 30 Gew.-% einer oder mehrerer Fettsäuremonoester,
a3) 35 bis 50 Gew.-% eines oder mehrerer Alkylenoxide mit 2 bis 4 C-Atomen, dadurch gekennzeichnet, dass
   die Polyole der Komponente a1) ausgewählt sind aus der Gruppe bestehend aus: Zuckern, Pentaerythrit, Sorbit, Trimethylolpropan, Glycerin, Ethylenglykol, Propylenglykol und Wasser und der Fettsäuremonoester der Komponente a2) ausgewählt ist aus der Gruppe bestehend aus: den Monoestern von Ölsäure, Stearinsäure, Palmitinsäure, und Linolensäure.

Durch den Einsatz der erfindungsgemäßen Polyetheresterpolyole kann die Netzwerkdichte eines resultierenden Schaums erhöht werden und somit seine Druckfestigkeit verbessert werden. Dies ermöglicht es, Bauteile mit niedrigerer Dichte, aber ansonsten gleichen mechanischen Eigenschaften herzustellen.

Die Polyetheresterpolyole ermöglichen Formulierungen für Schäume mit erhöhten Druckfestigkeiten und verbesserten Entformungseigenschaften. Überraschenderweise zeigen diese Formulierung sehr gute Fließeigenschaften, obwohl sehr wenig oder keine niederviskosen Polyole mit einer Funktionalität von 2 bis 4 und einer OH-Zahl von kleiner als 300 (sogenannte Fließpolyole) verwendet werden.

Bevorzugt weisen die Polyole a1) eine mittlere Funktionalität von 3 bis 7, besonders bevorzugt von 3,5 bis 6,5 auf.

Die Polyole der Komponente a1) sind ausgewählt aus der Gruppe bestehend aus Zuckern (Glucose, Saccharose), Pentaerythrit, Sorbit, Trimethylolpropan, Glycerin, Toluylendiamin, Ethylendiamin, Ethylenglykol, Propylenglykol und Wasser. Bevorzugt sind Zucker wie Saccharose, Sorbit, Glycerin, Wasser und Ethylenglykol sowie Gemische daraus, insbesondere bevorzugt sind Gemische enthaltend zwei oder mehr Verbindungen ausgewählt aus Saccharose, Glycerin und Wasser.

In einer speziellen Ausführungsform enthält die Komponente a1) ein Gemisch aus Glycerin und Saccharose.

Der Anteil an Polyolen a1) an den erfindungsgemäßen Polyetheresterpolyolen beträgt im Allgemeinen 20 bis 50 Gew.-%, bevorzugt 30 bis 40 Gew.-% und insbesondere 32 bis 38 Gew.-%, bezogen auf das Gewicht der Polyetheresterpolyole.

Im Allgemeinen ist der Fettsäuremonoester a2) ausgewählt aus der Gruppe bestehend aus Fettsäureestern basierend auf Ölsäure, Stearinsäure, Palmitinsäure, α- und γ-Linolensäure Bevorzugte Fettsäuremonoester sind die Methylester. Bevorzugt sind die Monoester von Ölsäure, Stearinsäure, Palmitinsäure und Linolensäure sowie Gemische daraus.

In einer bevorzugten Ausführungsform der Erfindung werden Fettsäuremonoester in Form von Fettsäuremethylestern eingesetzt.

In einer weiteren bevorzugten Ausführungsform der vorliegenden Erfindung ist der Fettsäuremonoester a2) Ölsäuremonoester oder Stearinsäuremonoester, besonders bevorzugt sind Ölsäuremethylester und Stearinsäuremethylester. Die Fettsäure oder der Fettsäuremonoester dient in der Regel dazu, die Treibmittellöslichkeit bei der Herstellung von Polyurethanschaumstoffen zu verbessern.

Der Fettsäuremonoesteranteil der erfindungsgemäßen Polyetheresterpolyole beträgt im Allgemeinen 5 bis 30 Gew.-%, besonders bevorzugt 8 bis 30 Gew.-% und insbesondere 12 bis 30 Gew.-%, bezogen auf das Gewicht der Polyetheresterpolyole.

Geeignete Alkylenoxide a3) mit 2 bis 4 C-Atomen sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Gemische aus Ethylenoxid und Propylenoxid mit > 50 Gew.-% Propylenoxid, insbesondere bevorzugt ist reines Propylenoxid.

In einer bevorzugten Ausführungsform wird als Alkoxylierungskatalysator ein Amin verwendet, bevorzugt Dimethylethanolamin oder Imidazol, besonders bevorzugt ist Imidazol.

Der Anteil an Alkylenoxiden an den erfindungsgemäßen Polyetheresterpolyole beträgt im Allgemeinen 35 bis 50 Gew.-%, bevorzugt 38 bis 50 Gew.-%, besonders bevorzugt 39 bis 50 Gew.-% und insbesondere 40 bis 45 Gew.-%, bezogen auf das Gewicht der Polyetheresterpolyole.

Die erfindungsgemäßen Polyetheresterpolyole weisen eine OH-Zahl von 300 bis 800 mg KOH/g, vorzugsweise von 400 bis 700 mg KOH/g, besonders bevorzugt von 450 bis 550 mg KOH/g und insbesondere von 475 bis 550 mg KOH/g auf.

Im Allgemeinen weisen die erfindungsgemäßen Polyetheresterpolyole eine mittlere Funktionalität von 2,5 bis 8, bevorzugt von 3 bis 7, besonders bevorzugt von 3,5 bis 6 und insbesondere von 4,5 bis 5,5 auf.

Die Viskosität der erfindungsgemäßen Polyetheresterpolyole beträgt im Allgemeinen < 40 000 mPas, bevorzugt < 30 000 mPas, besonders bevorzugt < 25 000 mPas und speziell < 20 000 mPas, jeweils gemessen bei 25 °C nach DIN 53018. Insbesondere die Verwendung von Ölsäuremethylester als Komponente a2) führt zu einer geringen Viskosität.

Weiterhin betrifft die Erfindung ein Verfahren zur Herstellung von Polyurethan-Hartschaumstoffen durch Umsetzung von
A) organischen oder modifizierten organischen Polyisocyanaten oder Gemischen daraus,
B) einem oder mehreren erfindungsgemäßen Polyetheresterpolyolen,
C) gegebenenfalls Polyesterpolyolen,
D) gegebenenfalls Polyetherolpolyolen, und
E) einem oder mehreren Treibmitteln,
F) Katalysatoren, sowie
G) gegebenenfalls weiteren Hilfsmitteln und/oder Zusatzstoffen.

Gegenstand der vorliegenden Erfindung ist auch eine Polyolmischung umfassend die Komponenten B) bis G), also
B) ein oder mehrere Polyetheresterpolyole,
C) gegebenenfalls Polyesterpolyole,
D) gegebenenfalls Polyetherpolyole,
E) ein oder mehrere Treibmittel,
F) Katalysatoren, sowie
G) gegebenenfalls weitere Hilfsmittel und/oder Zusatzstoffe.

Weitere Gegenstände der vorliegenden Erfindung sind auch Polyurethan-Hartschaumstoffe, einschließlich Polyisocyanurat-Hartschaumstoffen, erhältlich nach dem erfindungsgemäßen Verfahren, sowie die Verwendung der erfindungsgemäßen Polyetheresterpolyole zur Herstellung von Polyurethan-Hartschaumstoffen.

Im Allgemeinen ist der Anteil der erfindungsgemäßen Polyetheresterpolyole B) > 25 Gew.-%, bevorzugt > 40 Gew.-%, besonders bevorzugt > 50 Gew.-% und insbesondere bevorzugt > 52 Gew.-%, bezogen auf die Summe der Komponenten B) bis G).

Zur Herstellung der Polyurethan-Hartschaumstoffe nach dem erfindungsgemäßen Verfahren finden, neben den oben beschriebenen speziellen Polyetheresterpolyolen, die an sich bekannten Aufbaukomponenten Verwendung, zu denen im Einzelnen folgendes auszuführen ist. Polyurethan-Hartschaumstoffe schließen auch Polyisocyanurat-Hartschaumstoffe mit ein.

Als organische Polyisocyanate A) kommen die an sich bekannten aliphatischen, cycloaliphatischen, araliphatischen und vorzugsweise die aromatischen mehrwertigen Isocyanate in Frage. Die organischen Polyisocyanate können gegebenenfalls modifiziert sein.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugte Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch modifizierte mehrwertige Isocyanate, d.h. Produkte, die durch chemische Umsetzung organischer Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Polyisocyanate.

Zur Herstellung der erfindungsgemäßen Polyurethan-Hartschaumstoffen wird ganz besonders bevorzugt Polymer-MDI eingesetzt.

Geeignete Polyesterpolyole C) können beispielsweise aus organischen Dicarbonsäuren mit 2 bis 12 Kohlenstoffatomen, vorzugsweise aromatischen oder einem Gemisch aus aromatischen und aliphatischen Dicarbonsäuren, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Therephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole C) kommen auch biobasierte Ausgangsstoffe und/oder deren Derivate in Frage, wie z. B. Rizinusöl, Palmöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Myristoleinsäure, Palmitoleinsäure, Stearinsäure, Palmitinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Der Gehalt der Polyesterpolyole C) beträgt im Allgemeinen 0 bis 25 Gew.-%, bezogen auf die Summe der Komponenten B) bis G). In einer bevorzugten Ausführungsform der Erfindung werden keine weiteren Polyesterpolyole C) verwendet.

Bevorzugte Polyesterpolyole C) sind aus Adipinsäure, Phthalsäureanhydrid und/oder Terephthalsäureanhydrid als Dicarbonsäuren und Propylenglykol, Dipropylenglykol, Ethylenglykol, Diethylenglykol, Glycerin und/oder Trimethylolpropan als Alkoholkomponente sowie Ölsäure oder Rizinusöl hergestellt und weisen eine OH-Zahl von 150 bis 400 und eine Funktionalität von 2 bis 4,5 auf.

Mit verwendet werden können auch Polyetherpolyole D), die nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliummethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Propylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose. Besonders bevorzugt sind die oben genannten primären Amine, beispielsweise 2,3-Toluylendiamin.

Die Polyetherpolyole D), vorzugsweise Polyoxypropylenpolyole und/oder Polyoxyethylenpolyole, besitzen eine Funktionalität von vorzugsweise 2 bis 6 und insbesondere 2 bis 5 und zahlenmittlere Molekulargewichte von 150 bis 3000, vorzugsweise 200 bis 1500 und insbesondere 250 bis 750.

In einer besonders bevorzugten Ausführungsform der Erfindung wird ein propoxyliertes Toluylendiamin, insbesondere 2,3-Toluylendiamin als Polyetherpolyol D) mitverwendet.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften DE 11 11 394, 12 22 669 (US 3,304,273; 3,383,351; 3,523,093), 11 52 536 (GB 1040452) und 11 52 537 (GB 987,618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B 011 752 (US 4,304,708), US-A 4,374,209 und DE-A 32 31 497.

Die Polyetherpolyole können auch in Form von Mischungen mit verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, Alkylencarbonat oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).

Im Allgemeinen beträgt der Anteil der Polyetherpolyole D) 75 bis 55 Gew.-%, bevorzugt 55 bis 30 Gew.-%, besonders bevorzugt 30 bis 5 Gew.-%, bezogen auf die Summe der Komponenten B) bis G).

Zu Treibmitteln E), welche zur Herstellung der Polyurethan-Hartschaumstoffe verwendet werden, gehören vorzugsweise Wasser und physikalische Treibmittel wie niedrig siedende Kohlenwasserstoffe und deren Mischungen. Geeignet sind Flüssigkeiten, welche gegenüber den organischen, gegebenenfalls modifizierten Polyisocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine Ameisensäure und keine halogenierten Kohlenwasserstoffe als Treibmittel verwendet. Vorzugsweise Verwendung finden Wasser, alle Pentanisomere, sowie Gemische aus Wasser und Pentanisomeren.

Die Treibmittel sind ganz in der Polyolkomponente (d.h. B+C+E+F+G) gelöst oder werden direkt vor dem Verschäumen der Polyolkomponente über einen Statikmischer zudosiert.

Die eingesetzte Menge des physikalischen Treibmittels bzw. der Treibmittelmischung liegt bei 1 bis 45 Gew.-%, vorzugsweise 10 bis 30 Gew.-%, besonders bevorzugt 10 bis 20 Gew.-%, jeweils bezogen auf die Summe der Komponenten B) bis G).

Wasser als Treibmittel wird vorzugsweise der Komponente B) in einer Menge von 0,2 bis 5 Gew.-%, bezogen auf die Komponente B), zugesetzt. Der Wasserzusatz kann in Kombination mit dem Einsatz der anderen beschriebenen Treibmittel erfolgen. Bevorzugt wird Wasser in Kombination mit Pentan eingesetzt.

Als Katalysatoren F) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponente B) bis G) mit den organischen, gegebenenfalls modifizierten Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo(2,2,2)octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Gewicht der Komponenten B) bis G). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Der Reaktionsmischung zur Herstellung der Polyurethan-Hartschaumstoffe können gegebenenfalls noch weitere Hilfsmittel und/oder Zusatzstoffe G) zugesetzt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen bezogen auf das Gewicht der Komponenten B) bis G) angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung in Mengen von 0,5 bis 50 Gew.-%, vorzugsweise 1 bis 40 Gew.-%, bezogen auf das Gewicht der Komponenten A) bis E), zugegeben, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der erfindungsgemäßen Polyurethan-Hartschaumstoffe werden die gegebenenfalls modifizierten organischen Polyisocyanate A), die speziellen erfindungsgemäßen Polyetheresterpolyole B), gegebenenfalls die Polyesterpolyole C) und gegebenenfalls die Polyetherole und/oder weiteren Verbindungen mit mindestens zwei gegenüber Isocyanaten reaktiven Gruppen D) in solchen Mengen zur Umsetzung gebracht, dass das Äquivalenzverhältnis von NCO-Gruppen der Polyisocyanate A) zur Summe der reaktiven Wasserstoffatome der Komponenten B), gegebenenfalls C) gegebenenfalls D) sowie E) und F), 1 bis 3:1, vorzugsweise 1,1 bis 2:1 und insbesondere 1, bis 1,5:1 beträgt.

In einer bevorzugten Ausführungsform umfasst die Polyolkomponente
40 bis 100 Gew.-% der Polyetheresterpolyole B),
0 Gew.-% der weiteren Polyesterpoylole C),
5 bis 40 Gew.-% der Polyetherpolyole D),
10 bis 25 Gew.-% Treibmittel E),
1,0 bis 3 Gew.-% Katalysatoren F), sowie
1 bis 4 Gew.-% Hilfsmittel und/oder Zusatzstoffe G),
wobei die Summe der Komponenten B) und D) bis G) 100 Gew.-% ergibt.

Besonders bevorzugt umfasst die Polyolkomponente
50 bis 80 Gew.-% der Polyetheresterpolyole B),
0 Gew.-% der weiteren Polyesterpoylole C),
5 bis 30 Gew.-% der Polyetherpolyole D),
10 bis 20 Gew.-% Treibmittel E),
1,0 bis 2,5 Gew.-% Katalysatoren F) sowie
1,5 bis 3 Gew.-% weitere Hilfsmittel und/oder Zusatzstoffe G),
wobei die Summe der Komponenten B) und D) bis G) 100 Gew.-% ergibt.

Die Polyurethan-Hartschaumstoffe werden vorteilhafter Weise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90 °C, vorzugsweise von 20 bis 60 °C und insbesondere von 20 bis 35 °C, gemischt und in das offene oder gegebenenfalls unter erhöhtem Druck in das geschlossene Formwerkzeug eingebracht. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110 °C, vorzugsweise 30 bis 70 °C und insbesondere 40 bis 60 °C.

Die nach dem erfindungsgemäßen Verfahren hergestellten Polyurethan-Hartschaumstoffe weisen eine Dichte von 10 bis 300 g/l, vorzugsweise von 15 bis 100 g/l und insbesondere von 20 bis 40 g/l, auf.

Die Erfindung wird durch die nachstehenden Beispiele näher erläutert.

### Beispiele

### Pentanlöslichkeit

Die Pentanlöslichkeit wurde bestimmt, indem schrittweise Pentan in die zu messende Komponente gegeben wurde. In exakt 100 g der zu untersuchenden Komponente wurden je zu nach erwartender Pentanlöslichkeit Pentan zugegeben und vermischt. War das Gemisch weder trüb noch zweiphasig, so musste weiteres Pentan hinzugegeben und erneut vermischt werden.

War das Gemisch zweiphasig, ließ man das Glas bei Raumtemperatur offen stehen, bis das überschüssige Pentan verdampft und die verbleibende Lösung klar war, und wog dann die gelöste Menge Pentan zurück.

Bei einer Trübung wurde das Glas verschlossen und bei Raumtemperatur so lange stehen gelassen, bis sich zwei Phasen gebildet hatten. Danach erfolgte das Abdampfen und Zurückwiegen.

### Beispiel 1

Pentanverträglichkeit von erfindungsgemäßen Polyetheresterpolyolen im Vergleich zu herkömmlichen Polyolen

Als Vergleichspolyol dient Saccharose/Glycerin/PO Polyol mit einer OH-Zahl von 450 und einer Funktionalität von 5,0. Die erfindungsgemäßen Beispiele besitzen zusätzlichen zu den Ausgangsstoffen Saccharose/Glycerin/PO den angegeben Anteil (in Gew.-%) an Fettsäureestern.

**Tabelle 1**

| Zusammensetzung | OH-Zahl | Funktionalität | PentanverTräglichkeit [%] |
|---|---|---|---|
| Glycerin(7,6%)-Saccharose (25,0%)-PO(67,4%); Vergleichsbeispiel | 450 | 5,10 | 12,0 |
| Glycerin(8,77%)-Saccharose(22,01%)-Ölsäuremethylester(5%)-PO(63,98%);* | 459,8 | 5,01 | 16,6 |
| Glycerin(8,77%)-Saccharose(22,07%)-Ölsäuremethylester(12%)-PO(57,11%);* | 450,8 | 5,02 | 25,9 |
| Glycerin(9,56%)-Saccharose(24,02%)-Ölsäuremethylester(25%)-PO(41,37%) | 473,4 | 5,00 | 21,3 |
| Glycerin(6,48%)-Saccharose(24,5%)-Ölsäure(5%)-PO(63,98%);* | 455 | 5,02 | 16 |
| Glycerin(4,89%)-Saccharose(26,19%)-Ölsäure(8,5%)-PO(60,37%);* | 447,4 | 5,02 | 21,9 |
| (Glycerin(3,33%)-Saccharose(27,84%)-Ölsäure(12,01%)-PO(56,8%)* | 459,6 | 5,01 | 30,0 |

| | | | |
|---|---|---|---|
| *Referenzbeispiel | | | |

Das Vergleichsbeispiel zeigt, dass die Pentanverträglichkeit der Polyole durch die Mitverwendung von Fettsäuremonoester erhöht werden kann.

### Vergleichsbeispiel und Beispiele 2* und 3

Es wurden die nachstehenden Komponenten umgesetzt (alle Angaben in Gew.-%):
Polyol A aus Zucker 24,5%; Glycerin 6,48%; PO 63,98%; Ölsäure 5%, OH-Zahl 456 mg KOH/g;
Polyol B aus Zucker 20,04%; Glycerin 12,7%; PO 41,2%; Ölsäuremethylester 25,6%, OH-Zahl 489 mg KOH/g;
Polyol C aus vicinalem TDA 24,9%; PO 75,1%; OH-Zahl 400 mg KOH/g;
Polyol D aus vicinalem TDA 9,2%; EO 8,6%; PO 82,2; OH-Zahl 160 mg KOH/g;
Polyol E ist ein Polyetherol auf Basis von Saccharose, Glycerin und Propylenoixid, KOH-katalysiert, mit einer Funktionalität von 5,1 und einer OH-Zahl von 450 mg KOH/g;
Stabilisator 1: silikonhaltiger Schaumstabilisator (Tegostab® B8474 von Evonik)
Stabilisator 2: silikonhaltiger Schaumstabilisator (Tegostab® B8491 von Evonik)
Katalysator 1: Dimethylcyclohexylamin (DMCHA)
Katalysator 2: Pentamethyldiethylentriamin (PMDETA)
Katalysator 3: N,N,N-Tris-dimethylaminopropylhexahydrotriazin
Katalysator 4: Dimethylbenzylamin
Isocyanat: Polymer-MDI mit einem NCO-Gehalt von 31,5 Gew.-% (Lupranat® M20)

Aus den angegebenen Rohstoffen (alle Angaben in Gew.-%) wurde eine Polyolkomponente hergestellt. Mittels eines Hochdruck-Puromaten® PU 30/80 IQ (Elastogran GmbH) mit einer Austragsmenge von 250 g/sek. wurde die Polyolkomponente mit der erforderlichen Menge des angegebenen Isocyanats vermischt, so dass ein Isocyanat-Index (wenn nicht anders angegeben) von 116,7 erreicht wurde. Die Reaktionsmischung wurde in temperierte Formwerkzeuge der Abmessungen 2000 mm x 200 mm x 50 mm bzw. 400 mm x 700 mm x 90 mm eingespritzt und dort aufschäumen gelassen. Die Überfüllung betrug 14,5 %, d.h. es wurden 14,5% mehr Reaktionsmischung eingesetzt, als zum vollständigen Ausschäumen der Form notwendig gewesen wäre.

**Tabelle 2**

| | Vergleichsbeispiel | Referenz-Beispiel 2 | Beispiel 3 |
|---|---|---|---|
| Polyol A | | 73 | |
| Polyol B | | | 60 |
| Polyol C | 18 | 11 | 30 |
| Polyol D | 15 | 6 | |
| Polyol E | 58 | | |
| Stabilisator 1 | 2 | 2 | 2 |
| Stabilisator 2 | 0,75 | 0,75 | 0,75 |
| H2O | 2,55 | 2,55 | 2,55 |
| Katalysator 1 | 0,57 | 0,618 | 0,44 |
| Katalysator 2 | 0,918 | 0,988 | 0,71 |
| Katalysator 3 | 0,459 | 0,494 | 0,35 |
| Cyclopentan 95% | 13 | 13 | 13 |
| NCO-Index | 116,7 | 118 | 118 |
| Abbindezeit [s] | 38 | 37 | 37 |
| Frei geschäumte Dichte [g/L] | 24,99 | 22,73 | 23,4 |
| Polyolblend-Stabilität mit Cyclopentan bei RT | Klar | klar | klar |
| Polyolblend-Stabilität mit Cyclopentan bei 6 °C | Klar | klar | klar |

| Nachexpansion [%] | | | |
|---|---|---|---|
| 3 min | 3,6 | 3,56 | 3,11 |
| 4 min | 2,17 | 2,33 | 1,78 |
| 5 min | 1,44 | 1,56 | 1,00 |
| 7 min | 0,55 | 0,56 | 0,33 |
| Wärmeleitfähigkeit [mW/m*K] | 18,83 | 18,83 | 19,1 |
| Fließfähigkeit | 1,31 | 1,31 | 1,28 |
| Druckfestigkeit [N/mm²]@31 g/L | 0,152 | 0,160 | 0,144 |

Referenz-Beispiel 2 zeigt überraschenderweise gegenüber der Formulierung gemäß Vergleichsbeispiel 1 eine um 5,26% erhöhte Druckfestigkeit bei gleichbleibenden Fließ- und Entformungseigenschaften. Dies war nicht zu erwarten, da dem Fachmann bekannt ist, dass der erhöhte Einsatz von Vernetzer-Polyolen und die Verringerung des Anteils eines Fließpolyols zur Verschlechterung der Fließeigenschaften führt.

Beispiel 3 zeigt gegenüber Vergleichsbeispiel 1 überraschenderweise einen um 0,22%-0,49% niedrigeren Nachtrieb und somit eine Verbesserung der Entformungseigenschaften, sowie eine verbesserte Fließfähigkeit.

Diese beschriebenen Vorteile ergeben sich aus der speziellen chemischen Struktur der erfindungsgemäßen Polyetheresterpolyole und der dadurch ermöglichten Formulierungsfreiheit sowie der Möglichkeit, neue treibmittelverträgliche Formulierungen herzustellen.

### Referenz-Beispiel 4

20,2 g Glycerin, 0,1 g Imidazol, 50,8 g Saccharose sowie 11,5 g Ölsäuremethylester wurden bei 25 °C in einen 300 mL-Reaktor vorgelegt. Anschließend wurde dieser mit Stickstoff inertisiert. Der Kessel wurde auf 130 °C erhitzt und es wurden 147,5 g Propylenoxid zu dosiert. Nach einer Abreaktionszeit von 9 h wurde für 30 Minuten unter vollem Vakuum bei 100 °C evakuiert und anschließend auf 25 °C abgekühlt. Es wurden 217 g Produkt erhalten.

Der erhaltene Polyetherester besaß folgende Kennwerte:
OH-Zahl: 459,8 mg KOH/g
Viskosität (25 °C): 11324 mPas
Säurezahl: kleiner 0,01 mg KOH/g
Wassergehalt: kleiner 0,01%

### Referenz-Beispiel 5 Herstellung eines Polyetheresters mit Ölsäuremethylester

20,2 g Glycerin, 0,1 g Imidazol, 50,8 g Saccharose sowie 27,6 g Ölsäuremethylester wurden bei 25 °C in einen 300 mL-Reaktor vorgelegt. Anschließend wurde dieser mit Stickstoff inertisiert. Der Kessel wurde auf 130 °C erhitzt und es wurden 131,4 g Propylenoxid zudosiert. Nach einer Abreaktionszeit von 5 h wurde für 40 Minuten unter vollem Vakuum bei 100 °C evakuiert und anschließend auf 25 °C abgekühlt. Es wurden 219 g Produkt erhalten.

Der erhaltene Polyetherester besaß folgende Kennwerte:
OH-Zahl: 450,8 mg KOH/g
Viskosität (25 °C): 9453 mPas
Säurezahl: 0,05 mg KOH/g
Wassergehalt: 0,04%

### Referenz-Beispiel 6 Herstellung eines Polyetheresters mit Ölsäuremethylester

477,9 g Glycerin, 2,5 g Imidazol, 1250,2 g Saccharose sowie 1250,2 g Ölsäuremethylester wurden bei 25 °C in einen 5 L-Reaktor vorgelegt. Anschließend wurde dieser mit Stickstoff inertisiert. Der Kessel wurde auf 130 °C erhitzt und es wurden 2068,5 g Propylenoxid zudosiert. Nach einer Abreaktionszeit von 3,5 h wurde für 60 Minuten unter vollem Vakuum bei 100 °C evakuiert und anschließend auf 25 °C abgekühlt. Es wurden 4834,8 g Produkt erhalten.

Der erhaltene Polyetherester besaß folgende Kennwerte:
OH-Zahl: 473,4 mg KOH/g
Viskosität (25 °C): 11892 mPas
Säurezahl: 0,17 mg KOH/g
Wassergehalt: 0,021%

### Referenz-Beispiel 7 Herstellung eines Polyetheresters mit Ölsäure

14,9 g Glycerin, 0,1 g Imidazol, 56,4 g Saccharose sowie 11,6 g Ölsäure wurden bei 25 °C in einen 300 mL-Reaktor vorgelegt. Anschließend wurde dieser mit Stickstoff inertisiert. Der Kessel wurde auf 130 °C erhitzt und es wurden 147,1 g Propylenoxid zudosiert. Nach einer Abreaktionszeit von 7 h wurde für 40 Minuten unter vollem Vakuum bei 100 °C evakuiert und anschließend auf 25 °C abgekühlt. Es wurden 216,9 g Produkt erhalten.

Der erhaltene Polyetherester besaß folgende Kennwerte:
OH-Zahl: 455 mg KOH/g
Viskosität (25 °C): 20212 mPas
Säurezahl: kleiner 0,01 mg KOH/g
Wassergehalt: kleiner 0,01%

### Referenz-Beispiel 8 Herstellung eines Polyetheresters mit Ölsäure

244,4 g Glycerin, 2,5 g Imidazol, 1309,5 g Saccharose sowie 425,1 g Ölsäure wurden bei 25 °C in einen 5 L-Reaktor vorgelegt. Anschließend wurde dieser mit Stickstoff inertisiert. Der Kessel wurde auf 130 °C erhitzt und es wurden 3019,1 g Propylenoxid zudosiert. Nach einer Abreaktionszeit von 4,5 h wurde für 40 Minuten unter vollem Vakuum bei 100 °C evakuiert und anschließend auf 25 °C abgekühlt. Es wurden 4926,8 g Produkt erhalten.

Der erhaltene Polyetherester besaß folgende Kennwerte:
OH-Zahl: 447,4 mg KOH/g
Viskosität (25 °C): 20477 mPas
Säurezahl: kleiner 0,01 mg KOH/g
Wassergehalt: 0,03%

### Referenz-Beispiel 9 Herstellung eines Polyetheresters mit Ölsäure

7,7 g Glycerin, 0,1 g Imidazol, 64,0 g Saccharose sowie 27,6 g Ölsäure wurden bei 25 °C in einen 300 mL-Reaktor vorgelegt. Anschließend wurde dieser mit Stickstoff inertisiert. Der Kessel wurde auf 130 °C erhitzt und es wurden 130,6 g Propylenoxid zudosiert. Nach einer Abreaktionszeit von 7 h wurde für 30 Minuten unter vollem Vakuum bei 100 °C evakuiert und anschließend auf 25 °C abgekühlt. Es wurden 211,9 g Produkt erhalten.

Der erhaltene Polyetherester besaß folgende Kennwerte:
OH-Zahl: 459,6 mg KOH/g
Viskosität (25 °C): 41321 mPas
Säurezahl: kleiner 0,13 mg KOH/g
Wassergehalt: kleiner 0,01%

### Beispiel 10 Herstellung eines Polyetheresters mit Ölsäuremethylester

50,7 kg Glycerin, 0,2 kg Imidazol, 81,8 kg Saccharose sowie 102,4 kg Ölsäuremethylester wurden bei 25 °C in einen 600 L-Reaktor vorgelegt. Anschließend wurde dieser mit Stickstoff inertisiert. Der Kessel wurde auf 120 °C erhitzt und es wurden 165,0 kg Propylenoxid zudosiert. Nach einer Abreaktionszeit von 4 h wurde für 30 Minuten unter vollem Vakuum bei 120 °C evakuiert und anschließend auf 25 °C abgekühlt. Es wurden 377,0 kg Produkt erhalten.

Der erhaltene Polyetherester besaß folgende Kennwerte:
OH-Zahl: 458,0 mg KOH/g
Viskosität (25 °C): 8783 mPas
Säurezahl: kleiner 0,01 mg KOH/g
Wassergehalt: kleiner 0,01%

### Referenz-Beispiel 11 Herstellung eines Polyetheresters mit Ölsäure

25,9 kg Glycerin, 0,2 kg Imidazol, 98,0 kg Saccharose sowie 20,1 kg Ölsäure wurden bei 25 °C in einen 600 L-Reaktor vorgelegt. Anschließend wurde dieser mit Stickstoff inertisiert. Der Kessel wurde auf 120 °C erhitzt und es wurden 255,8 kg Propylenoxid zudosiert. Nach einer Abreaktionszeit von 1 h wurde für 30 Minuten unter vollem Vakuum bei 120 °C evakuiert und anschließend auf 25 °C abgekühlt. Es wurden 390,0 kg Produkt erhalten.

Der erhaltene Polyetherester besaß folgende Kennwerte:
OH-Zahl: 456,0 mg KOH/g
Viskosität (25 °C): 17367 mPas
Säurezahl: kleiner 0,01 mg KOH/g
Wassergehalt: 0,01%

## Patentansprüche

1. Polyetheresterpolyol enthaltend das Umsetzungsprodukt von
a1) 20 bis 50 Gew.% eines oder mehrerer Polyole mit einer mittleren Funktionalität von 2,5 bis 8,
a2) 5 bis 30 Gew.-% einer oder mehrerer Fettsäuremonoester,
a3) 35 bis 50 Gew.-% eines oder mehrerer Alkylenoxide mit 2 bis 4 C-Atomen, **dadurch gekennzeichnet, dass**
die Polyole der Komponente a1) ausgewählt sind aus der Gruppe bestehend aus: Zuckern, Pentaerythrit, Sorbit, Trimethylolpropan, Glycerin, Ethylenglykol, Propylenglykol und Wasser und der Fettsäuremonoester der Komponente a2) ausgewählt ist aus der Gruppe bestehend aus: den Monoestern von Ölsäure, Stearinsäure, Palmitinsäure, und Linolensäure.

2. Polyetheresterpolyol nach Anspruch 1, **dadurch gekennzeichnet, dass** die Komponente a2) Ölsäuremethylester ist.

3. Polyetheresterpolyol nach Anspruch 1 oder 2, **dadurch gekennzeichnet, dass** die Komponente a1) ein Gemisch aus Glycerin und Saccharose enthält.

4. Polyetheresterpolyol nach einem der Ansprüche 1 bis 3, **dadurch gekennzeichnet, dass** das Alkylenoxid der Komponente a3) Propylenoxid ist.

5. Polyetheresterpolyol nach einem der Ansprüche 1 bis 4, **dadurch gekennzeichnet, dass** es eine OH-Zahl von 200 bis 700 mg KOH/g aufweist.

6. Polyetheresterpolyol nach einem der Ansprüche 1 bis 5, **dadurch gekennzeichnet, dass** es eine Funktionalität von 2,5 bis 8 aufweist.

7. Verfahren zur Herstellung von Polyurethan-Hartschaumstoffen durch Umsetzung von
A) organischen oder modifizierten organischen Polyisocyanaten oder Gemischen daraus,
B) einem oder mehreren Polyetheresterpolyolen gemäß einem der Ansprüche 1 bis 6,
C) gegebenenfalls Polyesterpolyolen,
D) gegebenenfalls Polyetherolpolyolen,
E) einem oder mehreren Treibmitteln,
F) Katalysatoren, und
G) gegebenenfalls weiteren Hilfsmitteln und/oder Zusatzstoffen.

8. Polyurethan-Hartschaumstoff, erhältlich nach dem Verfahren gemäß Anspruch 7.

9. Polyolmischung enthaltend als Komponenten
B) ein oder mehrere Polyetheresterpolyole gemäß einem der Ansprüche 1 bis 6,
C) gegebenenfalls Polyesterpolyole,
D) gegebenenfalls Polyetherolpolyole,
E) ein oder mehrere Treibmittel,
F) Katalysatoren, sowie
G) gegebenenfalls weitere Hilfsmittel und/oder Zusatzstoffe.

10. Polyolmischung nach Anspruch 9 enthaltend
50 bis 80 Gew.-% der Polyetheresterpolyole B),
5 bis 30 Gew.-% der Polyetherpolyole D),
10 bis 20 Gew.-% Treibmittel E),
1,0 bis 2,5 Gew.-% Katalysatoren F),
1,5 bis 3 Gew.-% weitere Hilfsmittel und/oder Zusatzstoffe G),
wobei die Summe der Komponenten B) und D) bis G) 100 Gew.-% ergibt.

11. Polyolmischung nach Anspruch 9 oder 10, **dadurch gekennzeichnet, dass** sie keine weiteren Polyesterpolyole C) enthält.

12. Polyolmischung nach einem der Ansprüche 9 bis 11, **dadurch gekennzeichnet, dass** sie als Polyetherpolyol D) propoxyliertes Toluylendiamin enthält.

13. Verwendung der Polyetheresterpolyole gemäß einem der Ansprüche 1 bis 6 zur Herstellung von Polyurethan-Hartschaumstoffen.

## Claims

1. A polyetherester polyol comprising the reaction product of
a1) 20 to 50 wt% of one or more polyols having an average functionality of 2.5 to 8,
a2) 5 to 30 wt% of one or more fatty acid monoesters,
a3) 35 to 50 wt% of one or more alkylene oxides having 2 to 4 carbon atoms, wherein
the polyols of component a1) are selected from the group consisting of: sugars, pentaerythritol, sorbitol, trimethylolpropane, glycerol, ethylene glycol, propylene glycol and water and the fatty acid monoester of component a2) is selected from the group consisting of: monoesters of oleic acid, stearic acid, palmitic acid and linolenic acid:

2. The polyetherester polyol according to claim 1, wherein component a2) is methyl oleate.

3. The polyetherester polyol according to claim 1 or 2, wherein component a1) is a mixture of glycerol and sucrose.

4. The polyetherester polyol according to any of claims 1 to 3, wherein the alkylene oxide of component a3) is propylene oxide.

5. The polyetherester polyol according to any of claims 1 to 4, wherein it has an OH number of 200 to 700 mg KOH/g.

6. The polyetherester polyol according to any of claims 1 to 5, wherein it has a functionality of 2.5 to 8.

7. A process for producing rigid polyurethane foams by reaction of
A) organic or modified organic polyisocyanates or mixtures thereof,
B) one or more polyetherester polyols according to any of claims 1 to 6,
C) optionally polyester polyols,
D) optionally polyetherol polyols,
E) one or more blowing agents,
F) catalysts, and
G) optionally further auxiliaries and/or additives.

8. A rigid polyurethane foam obtainable by the process according to claim 7.

9. A polyol mixture comprising as components
B) one or more polyetherester polyols according to any of claims 1 to 6,
C) optionally polyester polyols,
D) optionally polyetherol polyols,
E) one or more blowing agents,
F) catalysts, and
G) optionally further auxiliaries and/or additives.

10. The polyol mixture according to claim 9 comprising
50 to 80 wt% of polyetherester polyols B),
5 to 30 wt% of polyether polyols D),
10 to 20 wt% of blowing agents E),
1.0 to 2.5 wt% of catalysts F),
1.5 to 3 wt% of further auxiliaries and/or additives G),
wherein said components B) and D) to G) sum to 100 wt%.

11. The polyol mixture according to claim 9 or 10 comprising no further polyester polyols C).

12. The polyol mixture according to any of claims 9 to 11 comprising propoxylated tolylenediamine as polyether polyol D).

13. The use of polyetherester polyols according to any of claims 1 to 6 for producing rigid polyurethane foams.

## Revendications

1. Polyétheresterpolyol contenant le produit de transformation de
a1) 20 à 50 % en poids d'un ou plusieurs polyols dotés d'une fonctionnalité moyenne de 2,5 à 8,
a2) 5 à 30 % poids d'un ou plusieurs monoesters d'acide gras,
a3) 35 à 50 % en poids d'un ou plusieurs oxydes d'alkylène comportant 2 à 4 atomes de C, **caractérisé en ce que**
les polyols du composant a1) sont choisis dans le groupe constitué par : des sucres, le pentaérythritol, le sorbitol, le triméthylolpropane, la glycérine, l'éthylèneglycol, le propylèneglycol et l'eau et le monoester d'acide gras du composant a2) est choisi dans le groupe constitué par : des monoesters d'acide oléique, d'acide stéarique, d'acide palmitique, et d'acide linolénique.

2. Polyétheresterpolyol selon la revendication 1, **caractérisé en ce que** le composant a2) est l'ester méthylique d'acide oléique.

3. Polyétheresterpolyol selon la revendication 1 ou 2, **caractérisé en ce que** le composant a1) contient un mélange de glycérine et de saccharose.

4. Polyétheresterpolyol selon l'une quelconque des revendications 1 à 3, **caractérisé en ce que** l'oxyde d'alkylène du composant a3) est l'oxyde de propylène.

5. Polyétheresterpolyol selon l'une quelconque des revendications 1 à 4, **caractérisé en ce qu'**il présente un indice d'OH de 200 à 700 mg de KOH/g.

6. Polyétheresterpolyol selon l'une quelconque des revendications 1 à 5, **caractérisé en ce qu'**il présente une fonctionnalité de 2,5 à 8.

7. Procédé pour la préparation de mousses dures de polyuréthane par transformation
A) de polyisocyanates organiques ou organiques modifiés ou de mélanges correspondants,
B) d'un ou plusieurs polyétheresterpolyols selon l'une quelconque des revendications 1 à 6,
C) éventuellement de polyesterpolyols,
D) éventuellement de polyétherpolyols,
E) d'un ou plusieurs propulseurs,
F) des catalyseurs, et
G) éventuellement d'autres auxiliaires et/ou additifs.

8. Mousse dure de polyuréthane, qui peut être obtenue par le procédé selon la revendication 7.

9. Mélange de polyols contenant en tant que composants
B) un ou plusieurs polyétheresterpolyols selon l'une quelconque des revendications 1 à 6,
C) éventuellement des polyesterpolyols,
D) éventuellement des polyétherpolyols,
E) un ou plusieurs propulseurs,
F) des catalyseurs,
G) ainsi qu'éventuellement d'autres auxiliaires et/ou additifs.

10. Mélange de polyols selon la revendication 9 contenant
50 à 80 % en poids des polyétheresterpolyols B),
5 à 30 % en poids des polyétherpolyols D),
10 à 20 % en poids de propulseur E),
1,0 à 2,5 % en poids de catalyseurs F),
1,5 à 3 % en poids d'autres auxiliaires et/ou additifs G),
la somme des composants B) et D) à G) donnant 100 % en poids.

11. Mélange de polyols selon la revendication 9 ou 10, **caractérisé en ce qu'**il ne contient aucun autre polyesterpolyol C).

12. Mélange de polyols selon l'une quelconque des revendications 9 à 11, **caractérisé en ce qu'**il contient, en tant que polyétherpolyol D), une toluylènediamine propoxylée.

13. Utilisation des polyétheresterpolyols selon l'une quelconque des revendications 1 à 6 pour la préparation de mousses dures de polyuréthane.
